# EUROPÄISCHE PATENTANMELDUNG

(11) **EP 4 241 554 A2**
(43) Veröffentlichungstag der Anmeldung: **13.09.2023**
(21) Anmeldenummer: 23153458.7
(22) Anmeldetag: 26.01.2023
(51) Int. Cl.: A01D 41/12, A01D 41/127, B60K 35/00, G02B 27/01, G06F 3/01, G06T 7/00, G06T 19/00, G06V 10/00

(54) **LANDWIRTSCHAFTLICHE ARBEITSMASCHINE SOWIE VERFAHREN ZU DEREN BETRIEB**

(30) Priorität: 10.03.2022 DE 102022105594
(71) Anmelder: CLAAS Selbstfahrende Erntemaschinen GmbH, 33428 Harsewinkel (DE)
(72) Erfinder: Thiesmann, Waldemar, 49080 Osnabrück (DE); Albers, Klaus, 48477 Hörstel (DE); Beck, Robert, 48231 Warendorf (DE); Galland, Stefan, 33428 Harsewinkel (DE); Geiger, Jan, 49074 Osnabrück (DE); Kirchbeck, Ingo, 59302 Oelde (DE); Losch, Michael, 33775 Versmold (DE); Piontek, Michael, 23701 Suesel (DE); Jürschik, Peter, 33335 Gütersloh (DE); Neitemeier, Dennis, 59510 Lippetal (DE); Jeppe, Eckehardt, 34289 Zierenberg (DE); Frenser, Reinhard, 33378 Rheda-Wiedenbrück (DE); Baumgarten, Joachim, 48361 Beelen (DE); Bormann, Bastian, 33334 Gütersloh (DE); Wilken, Andreas, 49143 Bissendorf (DE); Heufekes, Maik, 48145 Münster (DE); Domnik, Matthias, 59302 Oelde (DE); Barther, Marvin, 33803 Steinhagen (DE); Witte, Johann, 58730 Fröndenberg (DE); Schröder, Maximilian, 33330 Gütersloh (DE)
(74) Vertreter: CLAAS Gruppe

(57) **Zusammenfassung**

Die vorliegende Anmeldung betrifft eine landwirtschaftliche Arbeitsmaschine (1), insbesondere in Form eines selbstfahrenden Mähdreschers, umfassend eine Fahrerkabine (2) mit einem von einer Frontscheibe (3) und mindestens einer Seitenscheibe (4) räumlich teilweise begrenzten Innenraum (5), einen in dem Innenraum (5) angeordneten Fahrersitz (6), eine Eingabeeinrichtung (7) zur Tätigung von Eingaben durch einen Maschinenführer, ein Visualisierungssystem (8) zur Visualisierung von Informationen für einen auf dem Fahrersitz (6) sitzenden Maschinenführer sowie eine Steuereinrichtung (9), die mit dem Visualisierungssystem (8) in Daten übertragender Weise verbunden ist, wobei die Eingabeeinrichtung (7) mit der Steuereinrichtung (9) wirkverbunden ist, sodass getätigte Eingaben an die Steuereinrichtung (9) leitbar und mittels der Steuereinrichtung (9) hierdurch mindestens ein Arbeitsprozess der Arbeitsmaschine (1) auswählbar sind, wobei das Visualisierungssystem (8) mindestens ein innerhalb der Fahrerkabine (2) angeordnetes Display (10) sowie mindestens eine mit der Frontscheibe (3) und/oder der Seitenscheibe (4) zusammenwirkende Scheibenanzeige (11) umfasst.

Um die Visualisierung von Informationen für den Maschinenführer zu vereinfachen, wird erfindungsgemäß vorgeschlagen, dass die Steuereinrichtung (9) dazu eingerichtet ist, das Visualisierungssystem (8) derart anzusteuern, dass für den ausgewählten Arbeitsprozess relevante Prozessinformationen visualisiert werden.

## Beschreibung

Die vorliegende Anmeldung betrifft eine landwirtschaftliche Arbeitsmaschine gemäß dem Oberbegriff von Anspruch 1. Ferner betrifft die vorliegende Anmeldung ein Verfahren zum Betrieb einer landwirtschaftlichen Arbeitsmaschine gemäß dem Oberbegriff von Anspruch 10.

Die Arbeitsmaschine, die insbesondere von einem Mähdrescher oder einem Feldhäcksler gebildet sein kann, umfasst eine Fahrerkabine mit einem Innenraum, der räumlich zumindest teilweise von einer Frontscheibe und mindestens einer Seitenscheibe begrenzt ist. Die Seitenscheiben können von seitlichen Scheiben der Fahrerkabine sowie eine Rückscheibe der Fahrerkabine umfassen. Typischerweise ist der Innenraum von der Frontscheibe und zwei sich jeweils an die Frontscheibe anschließenden Seitenscheiben begrenzt, wobei der Innenraum normalerweise des Weiteren nach unten durch einen Boden, nach oben durch ein Dach und an einer der Frontscheibe gegenüberliegenden Seite von einer Rückwand begrenzt ist. In dem Innenraum ist ein Fahrersitz angeordnet, auf dem ein Maschinenführer Platz nehmen kann. Weiterhin umfasst die Arbeitsmaschine eine Eingabeeinrichtung, mittels der der Maschinenführer Eingaben tätigen kann. Die Eingabeeinrichtung kann insbesondere mit verschiedenen Eingabeelementen ausgeführt sein, die in räumlicher Nähe dem Fahrersitz, vorzugsweise an dem Fahrersitz, beispielsweise an einer Armlehne desselben, angeordnet sind. Beispielsweise ist es denkbar, dass die Eingabeeinrichtung einen Multifunktions-Bedienhebel, eine Tastatur, einen Joy-Stick und dergleichen umfasst. Auch kann mindestens ein Eingabeelement von einem Touch-Display gebildet sein, das gleichzeitig zur Tätigung von Eingaben sowie zur Visualisierung von Informationen mittels grafischer Elemente geeignet ist.

Weiterhin umfasst die Arbeitsmaschine ein Visualisierungssystem, mittels dessen dem Maschinenführer Informationen visualisierbar sind. Das Visualisierungssystem ist in der Regel derart ausgebildet, dass die Informationen von einem auf dem Fahrersitz sitzenden Maschinenführer besonders gut visuell aufnehmbar sind. Insbesondere kann das Visualisierungssystem über mindestens ein Display, beispielsweise in Form eines LC-Displays, verfügen, das relativ zu dem Fahrersitz ausgerichtet ist, sodass der Maschinenführer, der auf dem Fahrersitz sitzt, das Display besonders einfach ablesen kann. Ferner kann das Visualisierungssystem über mindestens eine Scheibenanzeige verfüge, mittels der Informationen in oder auf einer Scheibe visualisierbar ist. Eine solche Scheibenanzeige kann beispielsweise von einer in eine Scheibe einlaminierten Scheibenanzeige gebildet sein oder über einen Projektor verfügen, mittels dessen nach Art eines Head-up Displays Informationen auf eine Scheibe projiziert werden.

Zur Ansteuerung des Visualisierungssystems umfasst die Arbeitsmaschine weiterhin eine Steuereinrichtung, die mit dem Visualisierungssystem in Daten übertragender Weise verbunden ist. Die Steuereinrichtung ist dazu geeignet, das Visualisierungssystem derart anzusteuern, dass mittels des Visualisierungssystems Informationen visualisiert werden, die der Maschinenführer wahrnehmen kann. Ferner ist die Eingabeeinrichtung mit der Steuereinrichtung verbunden, sodass getätigte Eingaben an die Steuereinrichtung leitbar sind. Diese sind sodann mittels der Steuereinrichtung verarbeitbar, wodurch mittels der Steuereinrichtung mindestens ein Arbeitsprozess der Arbeitsmaschine auswählbar ist. Beispielsweise ist es denkbar, dass der Maschinenführer mittels einer Eingabe darauf hinwirkt, dass ein Ernteprozess als Arbeitsprozess ausgewählt wird.

Arbeitsmaschinen der vorstehend beschriebenen Art sind im Stand der Technik bereits bekannt. Hierzu wird beispielhaft auf das europäische Patent EP 3 794 927 B1 verwiesen. Dieses beschreibt eine Arbeitsmaschine, die mit einem Visualisierungssystem sowie einer Steuereinrichtung ausgerüstet ist. Ferner umfasst die Arbeitsmaschine eine Augenbeobachtung, mittels der eine Blickrichtung des Maschinenführers erfassbar ist. Gemäß besagter Schrift ist es bekannt, die Visualisierung von Informationen in Abhängigkeit einer Blickrichtung des Maschinenführers vorzunehmen. Auf diese Weise ist es insbesondere möglich, die Informationen stets im Blickfeld des Maschinenführers zu visualisieren.

Als problematisch hat es sich herausgestellt, dass dem Maschinenführer grundsätzlich eine Vielzahl von Informationen angezeigt wird, die für eine jeweilige Bediensituation typischerweise nur teilweise von Interesse für den Maschinenführer sind. Mit anderen Worten ist die Dichte von Informationen, die der Maschinenführer im Blick behalten muss, derart groß, dass dies zu einer Resignation führen kann, die letztlich eine Ignoranz der Informationen zur Folge hat. Dies ist zumindest dann von erheblichem Nachteil, wenn dabei auch wesentliche Informationen von dem Maschinenführer ignoriert werden und dieser daraufhin Handlungen oder Einstellungen nicht oder falsch vornimmt.

Der vorliegenden Anmeldung liegt mithin die Aufgabe zugrunde, die Visualisierung von Informationen für den Maschinenführer zu vereinfachen.

Die zugrunde liegende Aufgabe wird erfindungsgemäß mittels einer landwirtschaftlichen Arbeitsmaschine mit den Merkmalen des Anspruchs 1 gelöst. Vorteilhafte Ausgestaltungen ergeben sich aus den zugehörigen Unteransprüchen.

Erfindungsgemäß ist die Steuereinrichtung dazu eingerichtet, das Visualisierungssystem derart anzusteuern, dass für den jeweils ausgewählten Arbeitsprozess relevante Informationen ("Prozessinformationen") visualisiert werden. Hierbei kann die Steuereinrichtung insbesondere dazu eingerichtet sein, das Visualisierungssystem ferner in solcher Weise anzusteuern, dass andere Informationen, die für den ausgewählten Arbeitsprozess nicht relevant sind, lediglich in grafisch untergeordneter Form, bevorzugt gar nicht, visualisiert werden.

Die erfindungsgemäße Arbeitsmaschine hat viele Vorteile. Insbesondere ermöglicht sie eine reduzierte Darstellung von Informationen in Abhängigkeit eines jeweils ausgewählten Arbeitsprozesses. Diesen kann der Maschinenführer manuell mittels der Eingabeeinrichtung auswählen. Alternativ oder zusätzlich ist ebenfalls eine automatische Auswahl eines Arbeitsprozesses denkbar, beispielsweise in Abhängigkeit einer bewussten oder unterbewussten Handlung des Maschinenführers und/oder in Abhängigkeit mindestens eines Betriebsparameters der Arbeitsmaschine und/oder in Abhängigkeit mindestens eines Ernteparameters. Beispielsweise ist es denkbar, dass in Gegenwart eines gefüllten Korntanks einer als Mähdrescher ausgebildeten Arbeitsmaschine sowie nach Abschaltung einer Drescheinrichtung des Mähdreschers automatisch mittels der Steuereinrichtung als Arbeitsprozess ein Überladeprozess ausgewählt wird, in dem die Arbeitsmaschine zur Überladung von Erntegut von dem Korntank auf ein Transportfahrzeug betrieben wird. Die Auswahl eines solchen Arbeitsprozesses ist selbstverständlich alternativ oder zusätzlich manuell möglich, beispielsweise unter Verwendung eines Bedienelements. Infolge der reduzierten Darstellung der Prozessinformationen ist es für den Maschinenführer deutlich einfacher, einen Überblick über den jeweils ausgewählten Arbeitsprozess sowie einen Betriebszustand der Arbeitsmaschine zu behalten und fundierte Entscheidungen betreffend den Betrieb der Arbeitsmaschine zu treffen, ohne dem Gefühl einer Überladung mit Informationen ausgesetzt zu werden.

In einer vorteilhaften Ausgestaltung ist zusätzlich zu der Auswahl des Arbeitsprozesses mindestens ein Kontext des ausgewählten Arbeitsprozesses auswählbar. Dies kann entweder automatisch mittels der Steuereinrichtung und/oder infolge einer manuellen Eingabe mittels der Eingabeeinrichtung erfolgen. Die Steuereinrichtung ist dazu eingerichtet, das Visualisierungssystem derart anzusteuern, dass Prozessinformationen für den ausgewählten Arbeitsprozess in Abhängigkeit des ausgewählten Kontextes visualisiert werden. Dies kann bevorzugt in solcher Weise erfolgen, dass die Prozessinformationen priorisiert, weiter vorzugsweise ausschließlich, in Abhängigkeit des jeweils ausgewählten Kontextes visualisiert werden. Beispielsweise ist es denkbar, dass der Maschinenführer bei einer von einem Mähdrescher gebildeten Arbeitsmaschine den Arbeitsprozess "Dreschen" auswählt, woraufhin das Visualisierungssystem dahingehend angesteuert wird, dass nur für diesen Arbeitsprozess relevante Prozessinformationen visualisiert werden. Der Maschinenführer kann nunmehr des Weiteren als Kontext des Arbeitsprozesses "Dreschen" das Schneidwerk auswählen, woraufhin mittels der Steuereinrichtung des Visualisierungssystem derart angesteuert wird, dass für den Arbeitsprozess "Dreschen" bis auf Weiteres nur noch Prozessinformationen in dem Kontext "Schneidwerk" visualisiert werden. Dies kann beispielsweise einen Gutfluss von Erntegut in dem Schneidwerk sowie entsprechende Daten hinsichtlich des aktuellen Durchsatzes und dergleichen betreffen. Andere Prozessinformationen, die gleichermaßen den Arbeitsprozess "Dreschen" betreffen, beispielsweise einen Betrieb der Drescheinrichtung oder einer Trenneinrichtung, werden nach der Auswahl des Kontexts "Schneidwerk" entweder gar nicht oder lediglich reduziert visualisiert. Für den Maschinenführer ist es auf diese Weise besonders einfach, je nach Interessenlage sowie gegebenenfalls Notwendigkeit gezielt Prozessinformationen visualisieren zu lassen, die für eine aktuelle Situation von Bedeutung sind. Hierdurch ist die Bedienung der Arbeitsmaschine zusätzlich vereinfacht.

Hierbei ist es insbesondere denkbar, dass der Kontext zu einem Arbeitsprozess automatisch mittels der Steuereinrichtung ausgewählt wird. Die kann beispielsweise infolge von Informationen erfolgen, die die Steuereinrichtung von mindestens einer Sensoreinrichtung erhält. Beispielsweise ist es möglich, dass mittels einer Sensoreinrichtung ein Betriebsparameter des Mähdreschers überwacht wird. Sofern der Betriebsparameter außerhalb eines vorgegebenen Soll-Bereichs liegt, kann dies als Veranlassung herangezogen werden, den zugehörigen Teil eines jeweiligen Arbeitsprozesses gezielt in en Fokus des Maschinenführers zu bringen. Am Beispiel des Schneidwerks ist es denkbar, dass ein erhöhtes Antriebsmoment einer Förderschnecke des Schneidwerks erkannt wird, woraufhin die Steuereinrichtung automatisch als Kontext des Arbeitsprozesses "Dreschen" das Schneidwerk auswählt. Dem Maschinenführer werden daraufhin die zugehörigen Prozessinformationen priorisiert, vorzugsweise ausschließlich, visualisiert, sodass dieser sich einen Eindruck von einem Betriebszustand des Schneidwerks verschaffen und ggf. Handlungen vornehmen kann.

In einer besonders vorteilhaften Ausgestaltung umfasst die Arbeitsmaschine eine Augenbeobachtung, mittels der Informationen betreffend mindestens einen Augenparameter, insbesondere eine Blickrichtung des Maschinenführers, erfassbar sind. Diese Informationen sind an die Steuereinrichtung leitbar und mittels der Steuereinrichtung auswertbar. Hierbei ist die Steuereinrichtung dazu eingerichtet, das Visualisierungssystem derart anzusteuern, dass die Prozessinformationen betreffend den Arbeitsprozess und ggf. eines ausgewählten Kontexts in Abhängigkeit der mittels der Augenbeobachtung erfassten Informationen visualisiert werden. Die Augenbeobachtung kann insbesondere über mindestens eine Kamera verfügen, deren Sichtkegel auf einen Kopfbereich des Fahrersitzes gerichtet ist. Auf diese Weise ist es mittels der Kamera möglich, bei einem auf dem Fahrersitz sitzenden Maschinenführer eine Blickrichtung sowie sonstige Augenparameter optisch zu erfassen. Die Visualisierung der für den Arbeitsprozess relevanten Prozessinformationen erfolgt sodann in Abhängigkeit der mittels der Augenbeobachtung erfassten Informationen, wobei insbesondere ein Ort der Visualisierung und/oder ein Gegenstand der Prozessinformationen beeinflussbar ist. Mithin ist es von besonderem Vorteil, wenn die Prozessinformationen derart visualisierbar sind, dass sie sich möglichst fortwährend in einem Blickfeld des Maschinenführers befinden. Sollte der Maschinenführer beispielsweise seinen Blick zur Seite in Richtung einer der Seitenscheiben wenden, kann es beispielsweise besonders vorteilhaft sein, wenn die visualisierten Prozessinformationen der Blickrichtung nachgeführt mittels einer Scheibenanzeige des Visualisierungssystems an der Seitenscheibe visualisiert werden. Auch ist es denkbar, dass bei einem Blick des Maschinenführers in eine bestimmte Richtung bestimmte Teilmengen der zu dem Arbeitsprozess und gegebenenfalls dem ausgewählten Kontext visualisierten Prozessinformationen priorisiert oder sogar ausschließlich dargestellt werden. Somit ist es beispielsweise denkbar, dass bei einem Blick des Maschinenführers nach unten links in Richtung eines linken Endes der Haspel des Schneidwerks einer als Mähdrescher ausgebildeten Arbeitsmaschine dem Maschinenführer primär Prozessinformationen visualisiert werden, die die Haspel oder beispielsweise einen in dem genannten Bereich angeordneten Linienlaser der Arbeitsmaschine betreffen.

In einer weiterhin vorteilhaften Ausgestaltung ist die Steuereinrichtung dazu eingerichtet, das Visualisierungssystem derart anzusteuern, dass Informationen, insbesondere Prozessinformationen, kombiniert mittels des Displays und mittels der Scheibenanzeige visualisiert werden. Hierbei bilden die Informationen, die mittels des Displays und der Scheibenanzeige visualisiert werden, bevorzugt eine Informationseinheit. Eine solche ist dadurch gekennzeichnet, dass die Informationen der Informationseinheit in einem unmittelbaren inhaltlichen Zusammenhang miteinander stehen. Beispielweise ist es denkbar, dass ein erster Teil von Prozessinformationen zu einem ausgewählten Kontext mittels des Displays und ein zweiter Teil mittels der Scheibenanzeige visualisiert werden. Die kombinierte Visualisierung mittels des Displays und der Scheibenanzeige ermöglicht eine besonders übergangslose Visualisierung von Informationen. Hierbei ist es beispielsweise denkbar, dass die vorderen Tragsäulen der Fahrerkabine (A-Säulen), die an den einander gegenüberliegenden Enden der Frontscheibe angeordnet sind, jeweils mit einem Display zusammenwirken, die an den Tragsäulen befestigt sind. Die Displays können auf diese Weise die jeweilige Tragsäule optisch für den Maschinenführer erschließen, sodass bei einem Blick zu der jeweiligen Tragsäule visualisierte Informationen wahrnehmbar sind. Eine Kombination der Visualisierung von Informationen mittels eines solchen Displays und einer umliegend an der Frontscheibe sowie gegebenenfalls einer sich gleichermaßen an die Tragsäule anschließenden Seitenscheibe ermöglicht dem Maschinenführer eine durchgehende, das heißt unterbrechungsfreie bzw. übergangslose optische Oberfläche, auf der Informationen visualisierbar sind.

Die erfindungsgemäße Arbeitsmaschine weiter ausgestaltend umfasst diese mindestens einen Sensor, insbesondere in Form einer Kamera oder eines Lasers, mittels dessen eine Umgebung der Arbeitsmaschine beobachtbar ist. Hierdurch sind optische Informationen der Umgebung erfassbar. Diese sind von dem Sensor an die Steuereinrichtung leitbar, wobei die Steuereinrichtung dazu eingerichtet ist, die optischen Informationen mittels des Visualisierungssystems dem Maschinenführer zu visualisieren. In einer besonders vorteilhaften Ausgestaltung ist die Steuereinrichtung ferner dazu eingerichtet, die optische Informationen, die mittels des mindestens einen Sensors erfasst wurden, zumindest teilweise zu verändern. Auf diese Weise können veränderte optische Informationen erzeugt werden, die die Maschinenführer mittels des Visualisierungssystems visualisierbar sind. Hierbei kann es sich insbesondere um Prozessinformationen handeln. Auf diese Weise können insbesondere reale optische Informationen nach dem Prinzip der "augmented reality" mit virtuellen Elementen ergänzt und/oder ersetzt werden, wodurch dem Maschinenführer relevante Informationen besonders einfach und zugänglich visualisiert werden können. Beispielsweise ist es denkbar, dass lichtundurchlässige Bauteile, beispielsweise ein Bodenblech oder eine Wandung, virtuell transparent gestaltet wird, sodass für den Maschinenführer der Eindruck entsteht, er könne durch das lichtundurchlässige Bauteil hindurchschauen. Somit ist es vorstellbar, dass der Maschinenführer einen Füllstand eines Transportfahrzeugs optisch überwachen kann, indem eine Wandung des Transportfahrzeugs virtuell transparent visualisiert wird, wodurch der Maschinenführer unmittelbar sehen kann, wie weit das Transportfahrzeug mit jeweilig übergeladenem Erntegut bereits gefüllt ist. Informationen zu dem Füllstand des Transportfahrzeugs können dabei mittels weiterer Sensoren erfasst werden.

Die zugrunde liegende Aufgabe wird ferner mittels eines Verfahrens mit den Merkmalen des Anspruchs 10 gelöst. Vorteilhafte Ausgestaltungen ergeben sich aus den zugehörigen Unteransprüchen.

Das Verfahren ist dadurch gekennzeichnet, dass mittels des Visualisierungssystems Informationen visualisiert werden, die für einen jeweils ausgewählten Arbeitsprozess relevant sind ("Prozessinformationen"). Das erfindungsgemäße Verfahren ist mittels der erfindungsgemäßen Arbeitsmaschine besonders einfach ausführbar. Die sich hierdurch ergebenden Vorteile sind vorstehend bereits dargelegt. Insbesondere ist es möglich, dem Maschinenführer gezielt für einen jeweils ausgewählten Arbeitsprozess relevante Prozessinformationen darzustellen, woraus sich im Umkehrschluss ergibt, dass weniger oder gar nicht relevante Prozessinformationen nicht dargestellt werden. Hierdurch ist es für den Maschinenführer einfacher, einen Überblick über die Vielzahl von Prozessinformationen zu erhalten, die mit dem Betrieb einer jeweiligen Arbeitsmaschine typischerweise einhergehen.

Das Verfahren ist dann von besonderem Vorteil, wenn Prozessinformationen in Abhängigkeit eines ausgewählten Kontexts des ausgewählten Arbeitsprozesses visualisiert werden. Die Auswahl des jeweiligen Kontexts erfolgt bevorzugt automatisch, insbesondere mittels der Steuereinrichtung, und/oder manuell durch den Maschinenführer, insbesondere durch Verwendung der Eingabeeinrichtung. Die Visualisierung der Prozessinformationen für einen jeweiligen Arbeitsprozess in dem jeweilig ausgewählten Kontext kann zu einer weiteren Reduktion und mithin besseren Übersichtlichkeit der visualisierten Prozessinformationen verhelfen, wodurch insgesamt die Bedienung der Arbeitsmaschine für den Maschinenführer vereinfacht wird.

In besonders bevorzugter Weise werden die Prozessinformationen in Abhängigkeit einer Blickrichtung des Maschinenführers visualisiert. Dies erfolgt bevorzugt betreffend einen Ort der Visualisierung und/oder einen Gegenstand der visualisierten Prozessinformationen. Die hiermit im Zusammenhang stehenden Überlegung sind vorstehend bereits dargelegt. Insbesondere ist es möglich, den Kontext eines ausgewählten Arbeitsprozesses in Abhängigkeit einer Blickrichtung des Maschinenführers auszuwählen, wobei die Blickrichtung des Maschinenführers dahingehend interpretiert wird, dass sich der Maschinenführer beispielsweise für ein Bauteil oder eine Umgebung interessiert, auf die er seinen Blick richtet.

In einer besonders vorteilhaften Ausgestaltung des erfindungsgemäßen Verfahrens werden bei Auswahl eines Arbeitsprozesses, der von einem Überladeprozess zur Überladung von Erntegut auf ein Transportfahrzeug gebildet ist, dem Maschinenführer für den Überladeprozess relevante Prozessinformationen visualisiert. Insbesondere ist es denkbar, dass dem Maschinenführer Prozessinformationen betreffend einen Füllstand des Transportfahrzeugs und/oder betreffend einen Füllstand eines Korntanks der Arbeitsmaschine visualisiert werden. Ein Kontext des Arbeitsprozesses "Überladung" kann beispielsweise mittels einer manuellen Eingabe oder automatisch in Abhängigkeit einer Blickrichtung des Maschinenführers ausgewählt werden. Insbesondere ist es denkbar, dass Prozessinformationen betreffend einen Durchsatz von Erntegut durch eine jeweilige Überladeeinrichtung im Blickfeld des Maschinenführers mittels einer Scheibenanzeige visualisiert werden, wenn der Maschinenführer seitlich durch die jeweilige Seitenscheibe zu der Überladeeinrichtung schaut. Mithin werden bei diesem Beispiel dem Maschinenführer zu dem Arbeitsprozess "Überladung" gezielt Prozessinformationen in dem Kontext "Überladeeinrichtung" visualisiert, wobei der Kontext automatisch mittels der Steuereinrichtung in Abhängigkeit von Informationen ausgewählt wird, die mittels einer Augenbeobachtung erfasst werden.

Zusätzlich oder alternativ kann es von besonderem Vorteil sein, wenn optische Informationen, die der Steuereinrichtung zugeleitet werden, verändert und hierdurch veränderte optische Informationen erzeugt werden. Diese werden sodann die Maschinenführer mittels des Visualisierungssystems visualisiert. Die Erfassung optischer Informationen kann insbesondere mittels mindestens eines Sensors gemäß der vorstehenden Beschreibung erfolgen. Ebenfalls ist es denkbar, dass Informationen von einer zentralen Datenbank zur Verfügung gestellt werden, insbesondere über das Internet. Beispielsweise ist es denkbar, dass Luftaufnahmen oder Satellitenaufnahmen zu einem jeweils mittels der Arbeitsmaschine zu bearbeitenden Feld abgerufen werden, wobei die entsprechenden optischen Informationen mit grafischen Elementen angereichert werden. Diese können beispielsweise Informationen zu einem Ertrag beinhalten, der im Vorjahr in verschiedenen Bereichen des Feldes realisiert wurde. Auf diese Weise erhält der Maschinenführer Vergleichsdaten, die er für den weiteren Ernteprozess verwenden kann. Auch können andere Arten von Informationen verarbeitete und visualisiert werden, beispielsweise Informationen betreffend kartierte Hindernisse.

In besonders bevorzugter Weise werden optische Informationen, insbesondere solche, die mittels mindestens eines Sensors erfasst wurden, derart verändert, dass lichtundurchlässige Bauteile zumindest teilweise, vorzugsweise vollständig, transparent visualisiert werden. Wie vorstehend am Beispiel eines Überladeprozesses bereits veranschaulicht, kann es beispielsweise besonders vorteilhaft sein, eine Wandung eines jeweiligen Transportfahrzeugs, auf das Erntegut übergeladen wird, transparent zu visualisieren. Auf diese Weise kann der Maschinenführer virtuell durch die Wandung des Transportfahrzeugs hindurchschauen und optisch einen Füllstand des Transportfahrzeugs überwachen. Dies betrifft zum einen eine absolute Füllung des Transportfahrzeugs und zum anderen eine Verteilung des übergeladenen Ernteguts auf dem Transportfahrzeug. Auch ist es denkbar, dass die Maschinenführer Handlungsempfehlungen visualisiert werden, insbesondere mittels virtueller grafischer Elemente. Hierbei kann es sich beispielsweise um die Empfehlung einer Verlagerung der Überladeeinrichtung relativ zu dem Transportfahrzeug handeln, die beispielsweise mittels eines virtuellen Pfeils visualisiert wird.

In einer weiterhin vorteilhaften Ausgestaltung werden die optischen Informationen derart verändert, dass mindestens ein mittels des Sensors erfasster Gegenstand und/oder Bereich in einer gegenüber einer realen Gestalt abgewandelten Form visualisiert werden. Die abgewandelte Form kann insbesondere in einer Einfärbung oder Umrandung einzelner Bereiche bestehen. Beispielsweise ist es denkbar, dass mittels eines als Kamera ausgebildeten Sensors erfasste optische Informationen an die Steuereinrichtung geleitet und mittels dieser ausgewertet werden. Sofern die Steuereinrichtung, insbesondere mit Mitteln der Mustererkennung, Gegenstände identifiziert, die für den jeweiligen Arbeitsprozess der Arbeitsmaschine relevant sein könnten, werden diese Gegenstände in der Visualisierung für den Maschinenführer in abgewandelter Form hervorgehoben. Dies kann beispielsweise bei einem Ernteprozess einer als Mähdrescher ausgebildeten Arbeitsmaschine ein in einem Vorfeldbereich der Arbeitsmaschine befindliches Tier oder dergleichen betreffen. Die Veränderung der optischen Informationen erleichtert die Erkennbarkeit entsprechender Inhalte für den Maschinenführer, sodass Reaktionszeiten verkürzt und Dringlichkeiten betont werden können.

In einer besonders vorteilhaften Ausgestaltung des erfindungsgemäßen Verfahrens werden Informationen kombiniert auf mindestens einem Display mindestens einer Scheibenanzeige des Visualisierungssystems visualisiert. Hierbei werden Visualisierungsbereiche des Displays und der Scheibenanzeige vorzugsweise derart logisch miteinander verbunden, dass mindestens ein mittels des Visualisierungssystems visualisierter Inhalt zu einem ersten Teil mittels des Displays und zu einem anderen Teil mittels der Scheibenanzeige visualisiert werden. Das Verfahren hat den besonderen Vorteil, dass Informationen an einem optischen Übergang von einem jeweiligen Display zu der Scheibenanzeige übergangslos dargestellt werden, sodass sich für den Maschinenführer ein einheitliches Bild ergibt, dass er besonders einfach optisch wahrnehmen und entsprechend verarbeiten kann.

In besonders bevorzugter Weise werden ein erster Teil eines Bedienmenüs mittels des Displays und ein zweiter Teil desselben Bedienmenüs mittels der Scheibenanzeige visualisiert. Diese Ausgestaltung hat den besonderen Vorteil, dass zur Bedienung des jeweiligen Bedienmenüs durchgehend beide Teile des Bedienmenüs, insbesondere ein Hauptteil auf dem Display und ein Nebenteil auf der Scheibenanzeige, dem Maschinenführer visualisiert werden können, ohne dass der Maschinenführer zur gleichzeitigen Wahrnehmung beider Teile seine Blickrichtung verändern muss. Dies ist typischerweise dann der Fall, wenn verschiedene Teile eines Bedienmenüs auf voneinander beabstandeten Displays visualisiert werden, die eine Änderung der Blickrichtung des Maschinenführers erfordern, wenn dieser von dem einen Teil zu dem anderen Teil wechseln möchte. Alternativ ist es üblich, bei der Ausrufung eines Nebenteils eines Bedienmenüs, insbesondere eines Untermenüs, den bisher angezeigten Hauptteil des Bedienmenüs verkleinert oder gar nicht zu visualisieren. Dies ist ebenfalls für den Bedienungskomfort nachteilig. Die kombinierte Visualisierung mittels eines Displays und einer Scheibenanzeige vermeidet diese Nachteile.

Die Erfindung ist nachstehend anhand eines Ausführungsbeispiels, das in den Figuren dargestellt ist, näher erläutert. Es zeigt:
- Fig. 1:: Einen Querschnitt durch eine erfindungsgemäße Arbeitsmaschine,
- Fig. 2:: Ein Detail einer Fahrerkabine der Arbeitsmaschine gemäß Figur 1,
- Fig. 3:: Eine Ansicht eines Visualisierungssystems der Arbeitsmaschine gemäß Figur 1,
- Fig. 4:: Ein Detail eines Displays des Visualisierungssystems gemäß Figur 3,
- Fig. 5:: Ein weiteres Detail eines Displays,
- Fig. 6:: Eine schematische Draufsicht der Arbeitsmaschine gemäß Figur 1, die sich in einem Überladeprozess befindet,
- Fig. 7:: Eine Seitenansicht eines Transportfahrzeugs während eines Überladeprozesses,
- Fig. 8:: Die Seitenansicht gemäß Figur 7, jedoch verändert mit virtuellen grafischen Elementen,
- Fig. 9:: Eine Ansicht visualisierter Informationen, wobei zwei Gegenstände in geänderter Form visualisiert werden,
- Fig. 10:: Eine Ansicht visualisierter Informationen, wobei ein Bereich in geänderter Form visualisiert wird,
- Fig. 11:: Eine Ansicht visualisierter Informationen, wobei grafische Elemente ergänzt sind.

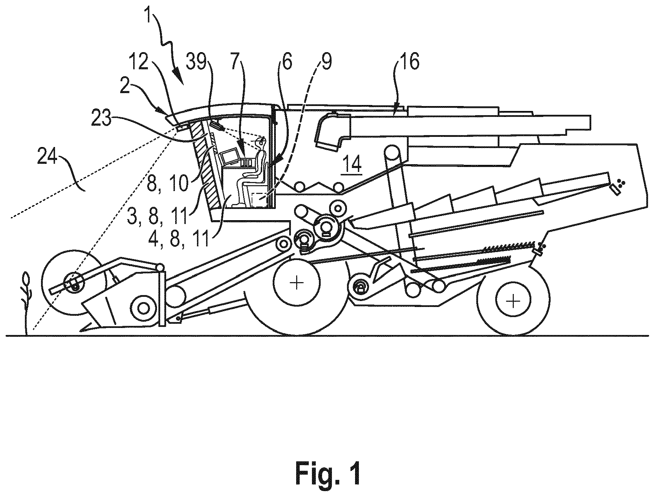

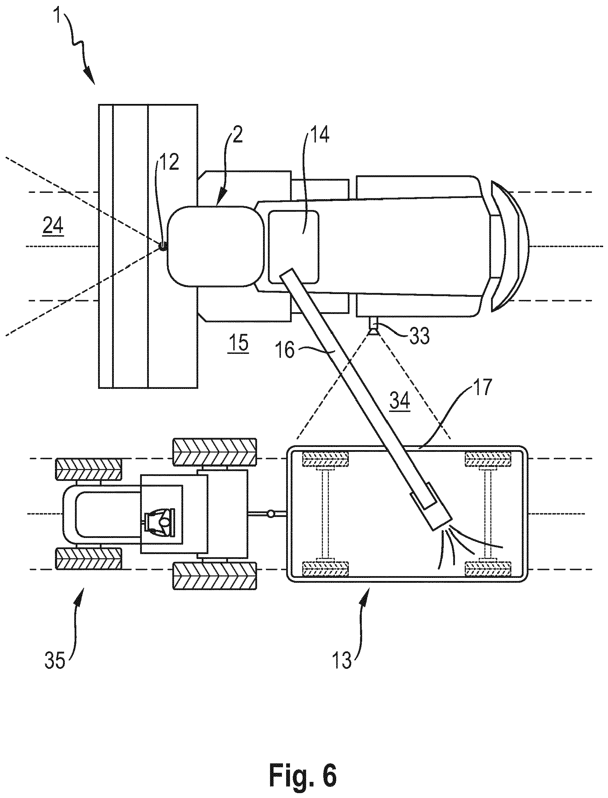

Ein Ausführungsbeispiel, das in den **Figuren 1 bis 11** dargestellt ist, umfasst eine erfindungsgemäße Arbeitsmaschine 1, die hier von einem Mähdrescher gebildet ist. Dies ergibt sich besonders gut anhand der **Figuren 1** **und** **6**. Die Arbeitsmaschine 1 umfasst eine Fahrerkabine **2,** die einen baulich begrenzten Innenraum **5** umfasst. Dieser ist zu einer Front der Arbeitsmaschine **1** hin von einer Frontscheibe **3** sowie zu den Seiten mittels Seitenscheiben **4** begrenzt. In dem Innenraum **5** der Fahrerkabine **2** ist ein Fahrersitz **6** angeordnet, auf dem ein Maschinenführer Platz nehmen kann. Der Fahrersitz **6** ist typischerweise derart relativ zu der Frontscheibe **3** sowie den Seitenscheiben **4** ausgerichtet, dass ein auf dem Fahrersitz **6** sitzender Maschinenführer seinen Blick nach vorne durch die Frontscheibe **3** richtet.

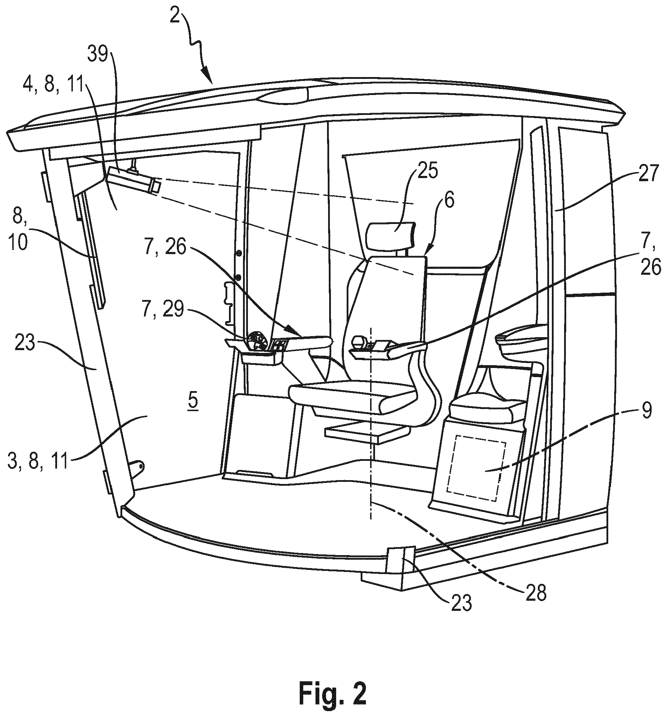

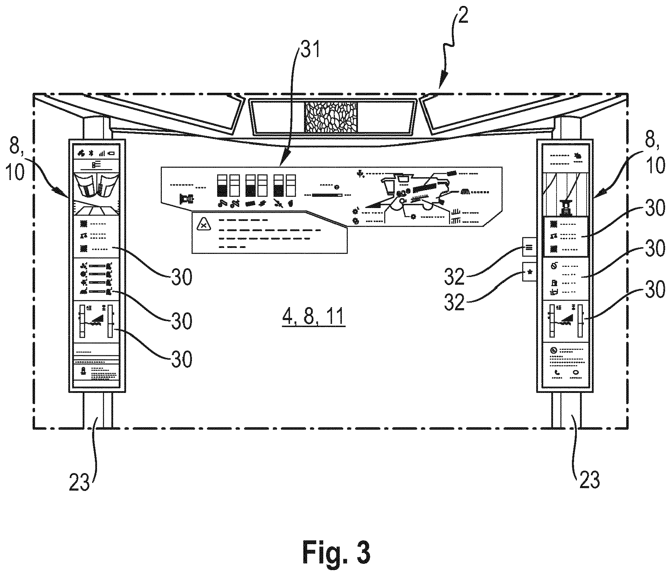

Die Arbeitsmaschine **1** umfasst des Weiteren ein Visualisierungssystem **8,** das mehrere Komponenten umfasst. In dem gezeigten Beispiel umfasst das Visualisierungssystem **8** zwei Displays **10,** die hier in Form von LC-Displays ausgebildet sind, sowie mehrere Scheibenanzeigen **11.** Letztere sind hier von Displayfolien gebildet, von denen jeweils eine in die Seitenscheiben **4** sowie die Frontscheibe **3** einlaminiert ist. Mittels der Scheibenanzeigen **11** sind Informationen unmittelbar im Bereich der jeweiligen Scheibe visualisierbar. Die Displays **10** sind an A-Säulen **23** der Fahrerkabine **2** angeordnet, wie sich besonders gut anhand der **Figuren 2** **und** **3** ergibt.

Die Arbeitsmaschine **1** umfasst außerdem eine Steuereinrichtung **9,** die in dem gezeigten Beispiel von einer Datenverarbeitungsanlage gebildet ist. Diese umfasst mindestens einen Prozessor, der zur Ausführung von Software geeignet ist. Ferner umfasst die Datenverarbeitungsanlage einen Speicher zur Speicherung von Informationen sowie Software. Das Visualisierungssystem **8** ist in Daten übertragender Weise mit der Steuereinrichtung **9** verbunden, wobei die Steuereinrichtung **9** dazu eingerichtet ist, das Visualisierungssystem **8** anzusteuern. Auf diese Weise können Informationen mittels des Visualisierungssystems **8** dem Maschinenführer visualisiert werden.

Weiterhin umfasst die Arbeitsmaschine **1** eine Eingabeeinrichtung **7,** die in dem gezeigten Beispiel mehrere Eingabeelemente umfasst. Mithin weist die Eingabeeinrichtung **7** hier einen Bedienhebel **29** auf, der mit einer Vielzahl von Schaltern besetzt ist. Ferner umfasst die Eingabeeinrichtung **7** weitere Eingabeelemente, die unmittelbar in Armlehnen **26** des Fahrersitzes **6** integriert sind. Die Eingabeeinrichtung **7** ist in Daten übertragender Weise mit der Steuereinrichtung **9** verbunden, sodass mittels der Eingabeeinrichtung **7** getätigte Eingaben an die Steuereinrichtung **9** leitbar und mittels der Steuereinrichtung **9** verarbeitbar sind. Insbesondere ist die Steuereinrichtung **9** dazu eingerichtet, das mittels der Eingabeeinrichtung **7** ein Arbeitsprozess der Arbeitsmaschine **1** auswählbar ist. Beispielsweise ist einstellbar, dass die Arbeitsmaschine **1** in einem Dreschprozess oder einem Überladeprozess betrieben werden soll.

Die Arbeitsmaschine **1** umfasst des Weiteren eine Augenbeobachtung **39,** die in dem gezeigten Beispiel eine Kamera umfasst. Diese ist auf eine Kopfstütze **25** des Fahrersitzes **6** gerichtet, sodass mittels der Augenbeobachtung **39** eine Augenpartie eines auf dem Fahrersitz **6** sitzenden Maschinenführers erfassbar ist. Weiterhin umfasst die Arbeitsmaschine **1** eine Sensor **12,** der hier von einer Kamera gebildet ist. Der Sensor **12** ist in dem gezeigten Beispiel an einem Dach der Fahrerkabine **2** angeordnet ist und weist einen Sichtkegel **24** auf, der auf einen Vorfeldbereich der Arbeitsmaschine **1** gerichtet ist.

Die Arbeitsmaschine **1** umfasst eine Vielzahl von Sensoren, die in den Figuren nicht dargestellt sind. Diese sind jeweils mit der Steuereinrichtung **9** verbunden, sodass Informationen, die mittels der Sensoren erfasst werden, an die Steuereinrichtung **9** leitbar und mittels dieser verarbeitbar sind. Diese Verarbeitung erfolgt unter anderem in solcher Weise, dass die Steuereinrichtung **9** das Visualisierungssystem **8** ansteuert, um dem Maschinenführer Informationen zu visualisieren. Dies kann beispielsweise in einer in den **Figuren 3 bis 5** veranschaulichten Art und Weise erfolgen. Hierbei werden mittels der Displays **10,** die an den A-Säulen **23** angeordnet sind, sowie mittels der Scheibenanzeigen **11,** die in die Frontscheibe **3** einlaminiert ist, verschiedene grafische Elemente **30, 31, 32** visualisiert. Diese grafischen Elemente **30, 31, 32** bilden Prozessinformationen betreffend einen Arbeitsprozess der Arbeitsmaschine **1** ab, die von dem Maschinenführer optisch wahrgenommen werden können. Der Maschinenführer kann auf diese Weise Probleme erkennen, Veränderungen vornehmen und Entscheidungen treffen. Erfindungsgemäß werden die Prozessinformationen für einen jeweils ausgewählten Arbeitsprozess visualisiert, wobei die visualisierten Prozessinformationen für den ausgewählten Arbeitsprozess relevant sind.

Zusätzlich ist in dem gezeigten Beispiel vorgesehen, dass der Maschinenführer einen Kontext zu dem jeweiligen Arbeitsprozess auswählen kann, wobei die Steuereinrichtung **9** dazu eingerichtet ist, das Visualisierungssystem **8** derart anzusteuern, dass die für den Arbeitsprozess relevanten Prozessinformationen priorisiert in Abhängigkeit des ausgewählten Kontexts visualisiert werden. Auf diese Weise wird die Menge an Prozessinformationen, die mittels des Visualisierungssystems **8** visualisiert werden, reduziert, sodass der Maschinenführer einen leichteren Überblick über einen Betriebszustand der Arbeitsmaschine **1** erhält.

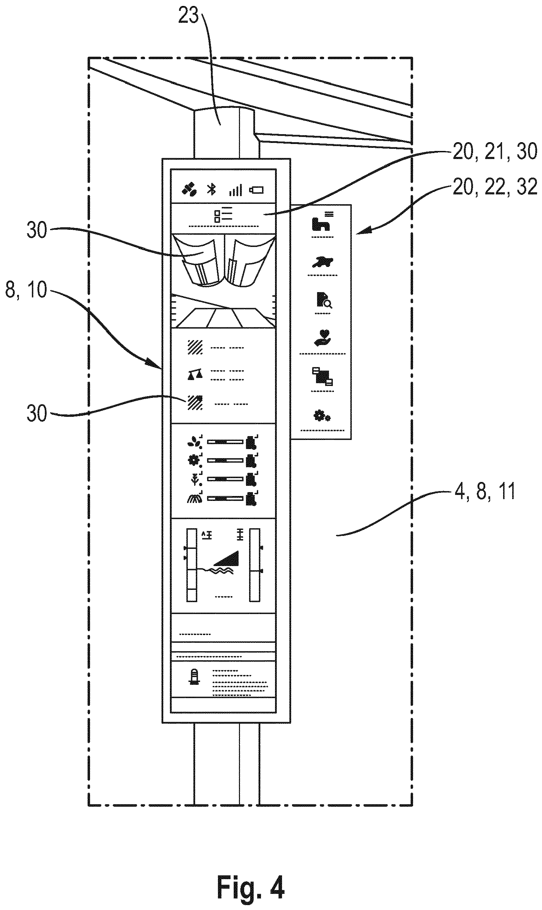

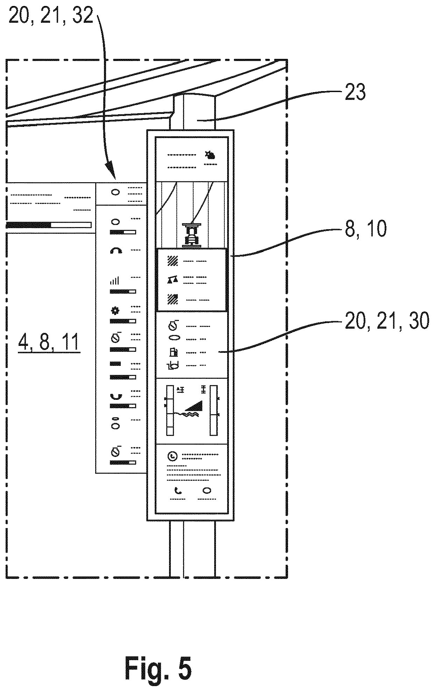

In besonders bevorzugter Weise werden Informationen, insbesondere Prozessinformationen, kombiniert mittels der Displays **10** und den Scheibenanzeigen **11** visualisiert. Dies ergibt sich besonders gut anhand der **Figuren 4** **und** **5**. Diese veranschaulichen, dass grafische Elemente **30,** die mittels eines Displays **10** visualisiert werden, durch ein grafisches Element **32** ergänzt sind, das mittels der Scheibenanzeigen **11** visualisiert wird, die in die Frontscheibe **3** einlaminiert ist. Das grafische Element **32** bildet hierbei einen unmittelbaren Anschluss an die grafischen Elemente **30,** die mittels des Displays **10** visualisiert werden. Eines der grafischen Elemente **30,** die mittels des Displays **10** visualisiert werden, bildet hier einen ersten Teil **21** eines Bedienmenüs **20,** während das grafische Element **32** hier von einem zweiten Teil **22** eines Bedienmenüs **20** gebildet ist, das eine Mehrzahl verschiedener Piktogramme umfasst. Jedes dieser Piktogramme steht repräsentativ für ein weiteres Menü, wobei der Maschinenführer zwischen den einzelnen Menüs mittels Auswahl eines der Piktogramme auswählen kann. Diese Auswahl kann insbesondere mittels der Eingabeeinrichtung **7** erfolgen.

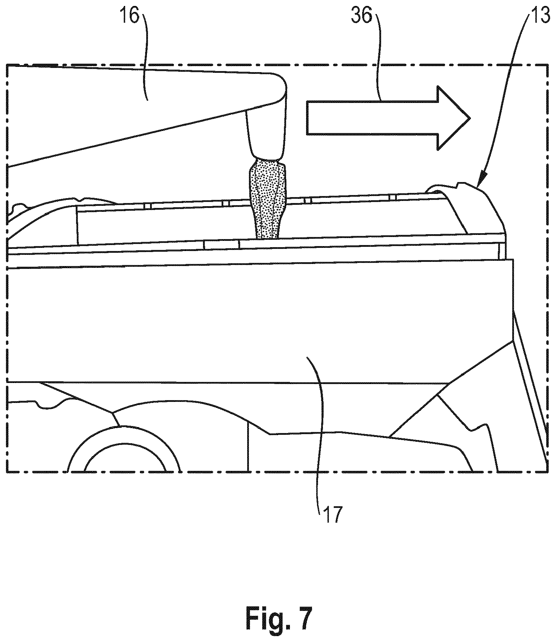

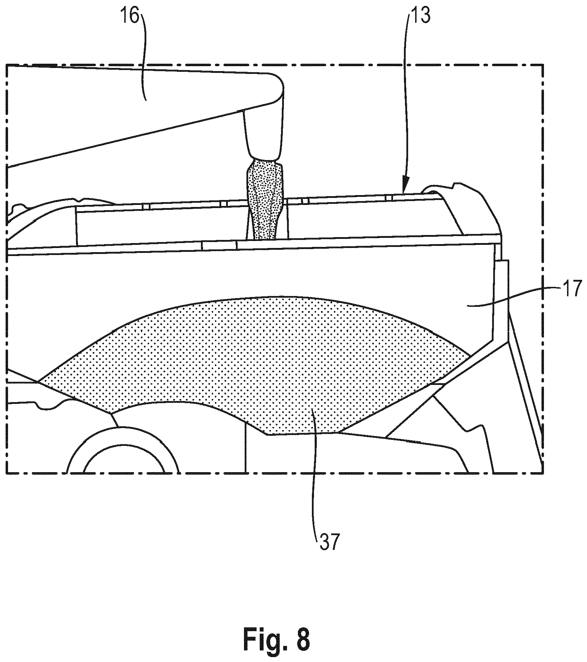

In besonders vorteilhafter Weise umfasst die Arbeitsmaschine **1** ferner einen weiteren Sensor **33,** der in einem Seitenbereich **15** der Arbeitsmaschine **1** angeordnet ist. Der Sensor **33** ist hier ebenfalls von einer Kamera gebildet. Der Sensor **33,** der einer Überladeeinrichtung **16** der Arbeitsmaschine **1** zugeordnet ist, ist derart ausgerichtet, dass ein Sichtkegel **34** des Sensors **33** einen seitlich von der Arbeitsmaschine **1** liegenden Bereich optisch erfasst. Im Zuge eines Überladeprozesseses wird geerntetes Erntegut, das in einen Korntank **14** der Arbeitsmaschine **1** temporär gelagert ist, auf ein Transportfahrzeug **13** übergeladen. Letzteres ist hier von einem Anhänger gebildet, der von einer Arbeitsmaschine **35** in Form eines Traktors gezogen wird. Der Sensor **33** ist auf eine seitliche Wandungen **17** des Transportfahrzeugs **13** ausgerichtet. Die mittels des Sensors **33** erfassten optischen Informationen werden an die Steuereinrichtung **9** geleitet und in dem gezeigten Beispiel derart verändert, dass sich geänderte optische Informationen ergeben. Die Steuereinrichtung **9** steuert sodann das Visualisierungssystem **8** an, mittels dessen die geänderten optischen Informationen dem Maschinenführer als Prozessinformationen visualisiert werden. Beispiele, zu welchem Ergebnis dies führen kann, sind in den **Figuren 7** **und** **8** erkennbar. Dort ist zum einen ein virtuelles grafisches Element **36** ergänzt, das hier von einem Pfeil gebildet ist. Die übrigen Inhalte geben die optischen Informationen wieder, wie sie von dem Sensor **33** erfasst wurden. Somit sind ein Teil der Überladeeinrichtung **16** sowie das Transportfahrzeug **13** mit seiner Warnung **17** erkennbar. Das grafische Element **36** kann beispielsweise als Handlungsempfehlung für den Maschinenführer dienen, wobei in dem gezeigten Beispiel die Empfehlung ausgesprochen wird, die Überladeeinrichtung **16** relativ zu dem Transportfahrzeug **13** weiter nach rechts zu bewegen, um eine Befüllung des Transportfahrzeugs **13** zu vereinheitlichen.

Ebenso ist denkbar, dass die Wandung **17** des Transportfahrzeugs **13,** die als solche lichtundurchlässig ist, virtuell transparent visualisiert wird. Auf diese Weise ergibt sich für den Maschinenführer der optische Eindruck, er könne durch die Wandung **17** hindurch in einen Innenraum des Transportfahrzeugs **13** blicken. Auf diese Weise hat er die Möglichkeit, das Erntegut **37,** das bereits übergeladen ist, und mithin einen Füllzustand des Transportfahrzeugs **13,** optisch zu kontrollieren.

Die Visualisierung der Prozessinformationen erfolgt bei den vorgenannten Beispielen in bevorzugter Weise mittels der Scheibenanzeige **11.** Hierbei ist es besonders von Vorteil, wenn die Prozessinformationen in Abhängigkeit einer Blickrichtung des Maschinenführers visualisiert werden. Insbesondere ist es denkbar, dass der Maschinenführer im Zuge des Überladeprozesses entweder seinen Kopf zur Seite dreht oder den gesamten Fahrersitz **6** um eine vertikale Drehachse **28** zu der zugehörigen Seitenscheibe **4** hin ausgerichtet, die sich zwischen der einen A Säule **23** sowie einer dahinterliegenden B-Säule **27** erstreckt. Mittels der Augenbeobachtung **39** wird erfasst, dass der Maschinenführer zu dem Seitenbereich **15** der Arbeitsmaschine **1** schaut, woraufhin für den ausgewählten Überladeprozess automatisch mittels der Steuereinrichtung **9** der Kontext "Überladeeinrichtung" ausgewählt wird. Für diesen Kontext werden nunmehr relevante Prozessinformationen mittels der Scheibenanzeigen **11** des Visualisierungssystems **8** in der Seitenscheibe **4** visualisiert. Weitere Prozessinformationen werden nicht visualisiert, sodass es dem Maschinenführer besonders leicht fällt, mit Blick auf das Transportfahrzeug **13** dessen Beladung als Teilaspekt des Überladeprozesses zu beobachten und zu überwachen.

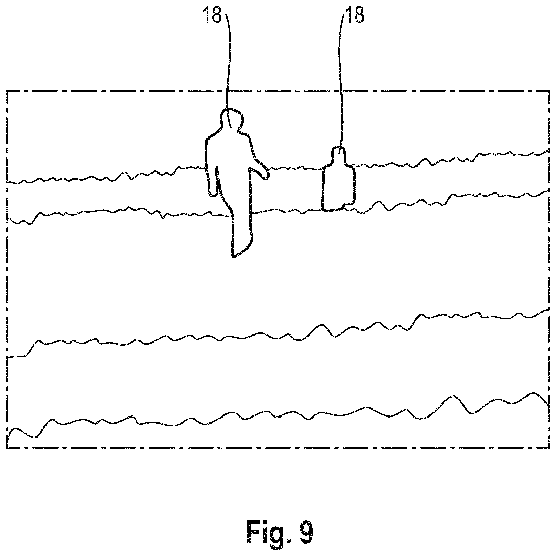

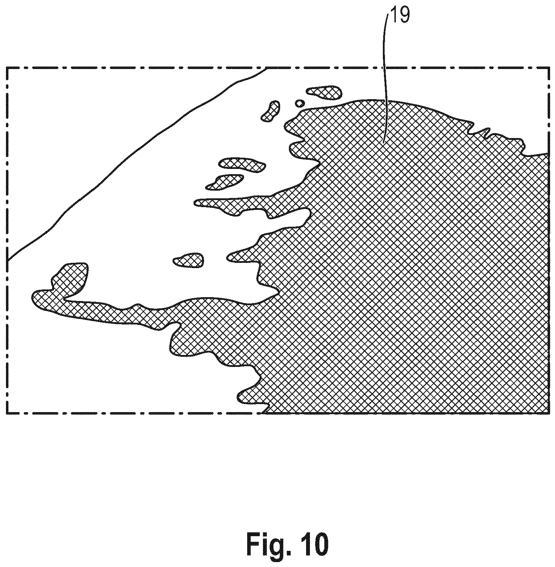

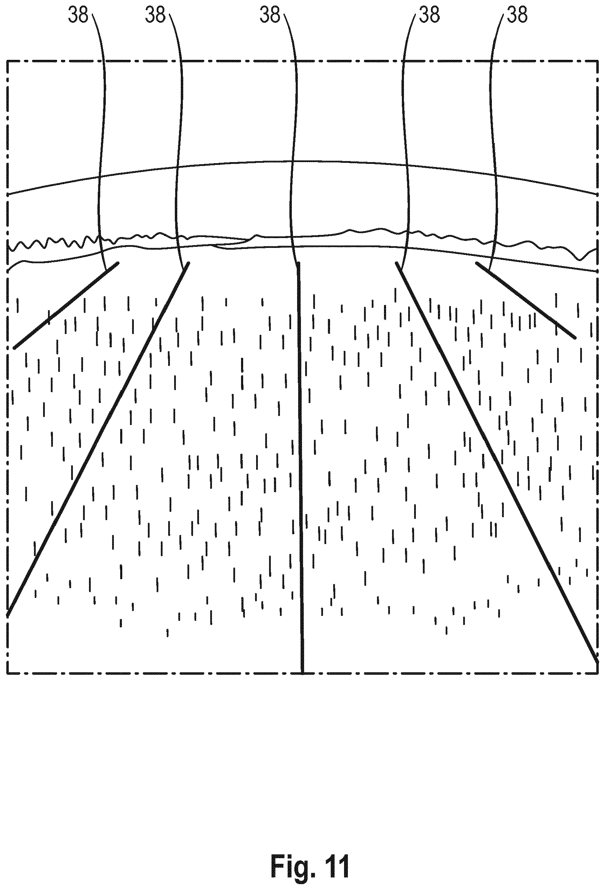

Weiterhin ist die Steuereinrichtung **9** dazu eingerichtet, optische Informationen, die mittels des frontseitig angeordneten Sensors **12** erfasst werden, zu verändern. Entsprechende Beispiele ergeben sich aus den **Figuren 9 bis 11**.hierbei werden insbesondere reale Gegenstände, beispielsweise mittels des Sensors **12** erfasste Personen oder Bereiche, in abgewandelter Form visualisiert. In dem in **Figur 9** gezeigten Beispiel werden zwei Personen **18,** die sich in einem Vorfeldbereich der Arbeitsmaschine **1** aufhalten, eingefärbt visualisiert, sodass sie für den Maschinenführer besonders einfach erkennbar sind. Hierdurch wird eine erhöhte Betriebssicherheit der Arbeitsmaschine **1** erreicht. In dem in **Figur 10** dargestellten Beispiel wird ein Bereich **19** eingefärbt visualisiert, der hier einen schwer befahrbaren, sumpfigen Untergrund beinhaltet. Auf diese Weise ist der Maschinenführer auf sich gegebenenfalls wechselnde Untergrundbedingungen eingestellt und kann entsprechende Vorkehrungen treffen. Bei dem in **Figur 11** dargestellten Beispiel sind die mittels des Sensors **12** erfassten optischen Informationen mit grafischen Elementen **38** angereichert, die dem Maschinenführer eine auf Navigationsdaten basierende Soll-Fahrspur für die Arbeitsmaschine **1** visualisieren. Die optischen Informationen der Kamera sind entsprechend mit virtuellen Bestandteilen, nämlich den genannten grafischen Elementen **38,** angereichert.

### Bezugszeichenliste

- 1: Arbeitsmaschine
- 2: Fahrerkabine
- 3: Frontscheibe
- 4: Seitenscheibe
- 5: Innenraum
- 6: Fahrersitz
- 7: Eingabeeinrichtung
- 8: Visualisierungssystem
- 9: Steuereinrichtung
- 10: Display
- 11: Scheibenanzeige
- 12: Kamera
- 13: Transportfahrzeug
- 14: Korntank
- 15: Seitenbereich
- 16: Überladeeinrichtung
- 17: Wandung
- 18: Person
- 19: Bereich
- 20: Bedienmenü
- 21: Teil
- 22: Teil
- 23: A-Säule
- 24: Sichtkegel
- 25: Kopfstütze
- 26: Armlehne
- 27: B-Säule
- 28: Drehachse
- 29: Bedienhebel
- 30: Grafisches Element
- 31: Grafisches Element
- 32: Grafisches Element
- 33: Kamera
- 34: Sichtkegel
- 35: Arbeitsmaschine
- 36: Grafisches Element
- 37: Erntegut
- 38: Grafisches Element
- 39: Augenbeobachtung

## Patentansprüche

1. Landwirtschaftliche Arbeitsmaschine (1), insbesondere in Form eines selbstfahrenden Mähdreschers, umfassend
- eine Fahrerkabine (2) mit einem von einer Frontscheibe (3) und mindestens einer Seitenscheibe (4) räumlich teilweise begrenzten Innenraum (5),
- einen in dem Innenraum (5) angeordneten Fahrersitz (6),
- eine Eingabeeinrichtung (7) zur Tätigung von Eingaben durch einen Maschinenführer,
- ein Visualisierungssystem (8) zur Visualisierung von Informationen für einen auf dem Fahrersitz (6) sitzenden Maschinenführer sowie
- eine Steuereinrichtung (9), die mit dem Visualisierungssystem (8) in Daten übertragender Weise verbunden ist,
wobei die Eingabeeinrichtung (7) mit der Steuereinrichtung (9) wirkverbunden ist, sodass getätigte Eingaben an die Steuereinrichtung (9) leitbar und mittels der Steuereinrichtung (9) hierdurch mindestens ein Arbeitsprozess der Arbeitsmaschine (1) auswählbar sind,
wobei das Visualisierungssystem (8) mindestens eine innerhalb der Fahrerkabine (2) angeordnetes Display (10) sowie mindestens eine Scheibenanzeige (11) zur Visualisierung von Informationen in oder auf Frontscheibe (3) und/oder der Seitenscheibe (4),
**dadurch gekennzeichnet, dass**
die Steuereinrichtung (9) dazu eingerichtet ist, das Visualisierungssystem (8) derart anzusteuern, dass für den ausgewählten Arbeitsprozess relevante Prozessinformationen visualisiert werden.

2. Arbeitsmaschine (1) nach Anspruch 1, **dadurch gekennzeichnet, dass** automatisch mittels der Steuereinrichtung (9) und/oder infolge einer manuellen Eingabe mittels der Eingabeeinrichtung (7) mindestens ein Kontext des ausgewählten Arbeitsprozesses auswählbar ist, wobei die Steuereinrichtung (9) dazu eingerichtet ist, das Visualisierungssystem (8) derart anzusteuern, dass Prozessinformationen für den ausgewählten Arbeitsprozess priorisiert, vorzugsweise ausschließlich, in Abhängigkeit des ausgewählten Kontexts visualisiert werden.

3. Arbeitsmaschine (1) nach einem der vorhergehenden Ansprüche, **gekennzeichnet durch** eine Augenbeobachtung (39), mittels der Informationen betreffend mindestens einen Augenparameter, insbesondere eine Blickrichtung des Maschinenführers, erfassbar sind, wobei die Informationen an die Steuereinrichtung (9) leitbar sind und die Steuereinrichtung (9) dazu eingerichtet ist, das Visualisierungssystem (8) derart anzusteuern, dass die Prozessinformationen in Abhängigkeit der mittels der Augenbeobachtung (39) erfassten Informationen visualisiert werden.

4. Arbeitsmaschine (1) nach Anspruch 3, **dadurch gekennzeichnet, dass** die Prozessinformationen in Abhängigkeit einer erfassten Blickrichtung des Maschinenführers visualisiert werden, vorzugsweise betreffend einen Ort der Visualisierung und/oder einen Gegenstand der Prozessinformationen.

5. Arbeitsmaschine (1) nach Anspruch 3 oder 4, **dadurch gekennzeichnet, dass** eine Teilmenge der für den ausgewählten Arbeitsprozess relevanten Prozessinformationen visualisiert wird.

6. Arbeitsmaschine (1) nach einem der vorhergehenden Ansprüche, **dadurch gekennzeichnet, dass** die Steuereinrichtung (9) dazu eingerichtet ist, das Visualisierungssystem (8) derart anzusteuern, dass Informationen kombiniert auf dem Display (10) und mittels der Scheibenanzeige (11) visualisiert werden, wobei vorzugsweise die auf dem Display (10) und die mittels der Scheibenanzeige (11) visualisierten Informationen eine Informationseinheit bilden.

7. Arbeitsmaschine (1) nach einem der vorhergehenden Ansprüche, **gekennzeichnet durch** mindestens eines Sensors (12, 33), mittels dessen eine Umgebung der Arbeitsmaschine (1) beobachtbar ist und hierdurch optische Informationen erfassbar sind, wobei mittels des Sensors (12, 33) erfasste optische Informationen an die Steuereinrichtung (9) leitbar und mittels des Visualisierungssystems (8) dem Maschinenführer visualisierbar sind.

8. Arbeitsmaschine (1) nach einem der vorhergehenden Ansprüche, **dadurch gekennzeichnet, dass** die Steuereinrichtung (9) dazu eingerichtet ist, optische Informationen zumindest teilweise zu verändern und auf diese Weise veränderte optische Informationen zu erzeugen, die dem Maschinenführer mittels des Visualisierungssystems (8) visualisierbar sind.

9. Arbeitsmaschine (1) nach Anspruch 8, **dadurch gekennzeichnet, dass** die Steuereinrichtung (9) dazu eingerichtet ist, reale Bestandteile der optischen Informationen derart durch virtuelle Bestandteile zu ersetzen und/oder zu ergänzen, dass mittels des Visualisierungssystems (8) lichtundurchlässige Bauteile, insbesondere lichtundurchlässige Bauteile der Arbeitsmaschine (1), zumindest teilweise, vorzugsweise vollständig, transparent visualisierbar sind.

10. Verfahren zum Betrieb einer landwirtschaftlichen Arbeitsmaschine (1), insbesondere in Form eines selbstfahrenden Mähdreschers, die Arbeitsmaschine (1) umfassend
- eine Fahrerkabine (2) mit einem von einer Frontscheibe (3) und mindestens einer Seitenscheibe (4) räumlich teilweise begrenzten Innenraum (5),
- einen in dem Innenraum (5) angeordneten Fahrersitz (6),
- eine Eingabeeinrichtung (7) zur Tätigung von Eingaben durch einen Maschinenführer,
- ein Visualisierungssystem (8) zur Visualisierung von Informationen für einen auf dem Fahrersitz (6) sitzenden Maschinenführer sowie
- eine Steuereinrichtung (9), die mit dem Visualisierungssystem (8) in Daten übertragender Weise verbunden ist,
wobei die Eingabeeinrichtung (7) mit der Steuereinrichtung (9) wirkverbunden ist, sodass getätigte Eingaben an die Steuereinrichtung (9) leitbar und mittels der Steuereinrichtung (9) hierdurch mindestens ein Arbeitsprozess der Arbeitsmaschine (1) auswählbar sind,
wobei das Visualisierungssystem (8) mindestens ein innerhalb der Fahrerkabine (2) angeordnetes Display (10) sowie mindestens eine mit der Frontscheibe (3) und/oder der Seitenscheibe (4) zusammenwirkende Scheibenanzeige (11) umfasst,
**dadurch gekennzeichnet, dass**
mittels des Visualisierungssystems (8) Prozessinformationen visualisiert werden, die für einen ausgewählten Arbeitsprozess relevant sind.

11. Verfahren nach Anspruch 10, **dadurch gekennzeichnet, dass** Prozessinformationen in Abhängigkeit eines automatisch und/oder manuell von dem Maschinenführer ausgewählten Kontexts des ausgewählten Arbeitsprozesses visualisiert werden.

12. Verfahren nach Anspruch 11, **dadurch gekennzeichnet, dass** die Prozessinformationen in Abhängigkeit einer Blickrichtung des Maschinenführers der Arbeitsmaschine (1) visualisiert werden, vorzugsweise betreffend einen Ort der Visualisierung und/oder einen Gegenstand der Prozessinformationen.

13. Verfahren nach einem der vorhergehenden Ansprüche, **dadurch gekennzeichnet, dass** bei Auswahl eines Arbeitsprozesses, der von einem Überladeprozess zur Überladung von Erntegut auf ein Transportfahrzeug (13) gebildet ist, dem Maschinenführer für den Überladeprozess relevante Prozessinformationen visualisiert werden, insbesondere Prozessinformationen betreffend einen Füllstand eines Transportfahrzeugs (13) und/oder betreffend einen Füllstand eines Korntanks (14) der Arbeitsmaschine (1).

14. Verfahren nach einem der vorhergehenden Ansprüche, **dadurch gekennzeichnet, dass** optische Informationen, die der Steuereinrichtung (9) zugeleitet werden, verändert und hierdurch veränderte optische Informationen erzeugt werden, die dem Maschinenführer mittels des Visualisierungssystems (8) visualisiert werden.

15. Verfahren nach Anspruch 14, **dadurch gekennzeichnet, dass** die optischen Informationen mittels mindestens eines Sensors (12, 33) der Arbeitsmaschine (1) erfasst und/oder von einer zentralen Datenbank empfangen werden.

16. Verfahren nach Anspruch 14 oder 15, **dadurch gekennzeichnet, dass** die optischen Informationen derart verändert werden, dass lichtundurchlässige Bauteile zumindest teilweise, vorzugsweise vollständig, transparent visualisiert werden.

17. Verfahren nach Anspruch 16, **dadurch gekennzeichnet, dass** mittels mindestens eines Sensors (33) ein Seitenbereich (15) der Arbeitsmaschine (1) erfasst wird, der einer Überladeeinrichtung (16) der Arbeitsmaschine (1) zugeordnet ist, wobei für einen Arbeitsprozess der Arbeitsmaschine (1), der von einem Überladeprozess zur Überladung von Erntegut auf ein Transportfahrzeug (13) gebildet ist, die Überladeeinrichtung (16) aktiv ist und mittels des Sensors (12) erfasste optische Informationen, die das Transportfahrzeug (13) beinhalten, derart verändert werden, dass zumindest eine Wandung (17) des Transportfahrzeugs (13) dem Maschinenführer zumindest teilweise transparent visualisiert wird.

18. Verfahren nach einem der Ansprüche 14 bis 17, **dadurch gekennzeichnet, dass** die optischen Informationen derart verändert werden, dass mindestens ein mittels des mindestens einen Sensors (12, 33) erfasster Gegenstand (18) und/oder Bereich (19) dem Maschinenführer in gegenüber einer realen Gestalt abgewandelter Form, insbesondere eingefärbt oder farblich umrandet, visualisiert wird.

19. Verfahren nach einem der vorhergehenden Ansprüche, **dadurch gekennzeichnet, dass** Informationen kombiniert auf mindestens einem Display (10) und mindestens einer Scheibenanzeige (11) des Visualisierungssystems (8) visualisiert werden, wobei vorzugsweise Visualisierungsbereiche des Displays (10) und der Scheibenanzeige (11) logisch derart miteinander verbunden sind, dass mindestens ein mittels des Visualisierungssystems (8) visualisierter Inhalt zu einem Teil mittels des Displays (10) und zu einem anderen Teil mittels der Scheibenanzeige (11) visualisiert werden.

20. Verfahren nach Anspruch 19, **dadurch gekennzeichnet, dass** ein erster Teil (21) eines Bedienmenüs (20), insbesondere dessen Hauptteil, mittels des Displays (10) und ein zweiter Teil (22) desselben Bedienmenüs (20), insbesondere ein Nebenteil, mittels der Scheibenanzeige (11) visualisiert werden.
